(19) Europäisches Patentamt / European Patent Office / Office européen des brevets

(11) **EP 2 686 632 B1**

(12) **EUROPEAN PATENT SPECIFICATION**

(45) Date of publication and mention
of the grant of the patent:
**19.04.2017 Bulletin 2017/16**

(21) Application number: **12713389.0**

(22) Date of filing: **16.03.2012**

(51) Int Cl.:
**F28D 20/00** *(2006.01)*    **C09K 5/16** *(2006.01)*

(86) International application number:
**PCT/JP2012/057672**

(87) International publication number:
**WO 2012/128380 (27.09.2012 Gazette 2012/39)**

(54) **CHEMICAL HEAT ACCUMULATOR AND METHOD FOR PRODUCING THE SAME**

CHEMISCHER WÄRMESPEICHER UND SEINE HERSTELLUNG

ACCUMULATEUR CHIMIQUE DE CHALEUR ET SA FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.03.2011 JP 2011061617**

(43) Date of publication of application:
**22.01.2014 Bulletin 2014/04**

(73) Proprietors:
• **Kabushiki Kaisha Toyota Chuo Kenkyusho
Nagakute-shi, Aichi 480-1192 (JP)**
• **Omi Mining Co. Ltd
Shiga 521-0242 (JP)**

(72) Inventors:
• **SHIMAZU, Takashi
Nagakute-shi
Aichi 480-1192 (JP)**
• **MOCHIZUKI, Miyo
Nagakute-shi
Aichi 480-1192 (JP)**
• **HARA, Masashi
Nagakute-shi
Aichi 480-1192 (JP)**
• **ITAHARA, Hiroyuki
Maibara-shi
Shiga 521-0242 (JP)**
• **SAWADA, Tsutomu
Maibara-shi
Shiga 521-0242 (JP)**
• **FUJIMURA, Takatsune
Maibara-shi
Shiga 521-0242 (JP)**

(74) Representative: **Kramer Barske Schmidtchen
Patentanwälte PartG mbB
European Patent Attorneys
Landsberger Strasse 300
80687 München (DE)**

(56) References cited:
**DE-A1- 3 932 988        JP-A- 61 265 494
JP-A- 2010 216 772      US-A1- 2002 100 369
US-A1- 2010 252 248**

EP 2 686 632 B1

**Description**

Technical Field

The present invention relates to a chemical heat accumulator including a chemical heat storage material that absorbs and releases heat, and a method for producing the chemical heat accumulator.

Background Art

Chemical heat storage materials are substances that can absorb and release heat by utilizing chemical reactions and are widely known conventionally, and the use of chemical heat storage materials has been studied in various fields.

For example, a chemical heat storage material including quick lime having a large number of pores as a main body has been disclosed, and it is said that, by having a large number of pores, the volume expansion in the process of the change from quick lime into hydrated lime is absorbed as compared with a conventional chemical heat storage material that does not have any surplus spaces such as holes and, as a result, destruction of particles or powderization does not occur (see, for example, Japanese Patent Application Laid-Open (JP-A) No. 1-225686).

Further, a chemical heat storage capsule in which a chemical heat storage material in the form of powder is filled at a predetermined proportion into a cylindrical body of a porous body, and a heat storage device in which a reactor filled with such heat storage capsules is connected to a heat supply device, have been disclosed (see, for example, Japanese Patent Application Publication (JP-B) Nos. 6-80394 and 6-80395). In a heat storage system, it is also important to conduct heat exchange by passing heat to the outside of the system along with the reaction. In the case of filling and encapsulating particles in a cylindrical body, thermal rate limitation may easily occur due to the increase in the resistance of heat conduction caused by the filling into capsules, complication of contact routes depending on the distance between the particles, and the like.

SUMMARY OF INVENTION

Technical Problem

In a system using a chemical heat storage material, in a case in which, as described above for example, calcium hydroxide is used as a chemical storage material, during operation of the system, the following reversible reaction is repeated between calcium oxide and calcium hydroxide. In this process, the volume of each particle expands or shrinks by several tens of percents.

$$CaO + H_2O \leftrightarrow Ca(OH)_2$$

Therefore, as per the conventional technique described above, by using particles having pores, it is expected that destruction of particles may be suppressed to a certain degree; however, in actual fact, the volume change is large, and the reality is that the influence of volume expansion or shrinkage cannot be absorbed only by means of having pores. For this reason, there is the problem that destruction of the particles used in the chemical heat storage material may be caused by the repeated changes in volume.

US 2010/0252248 A1 relates to a heat exchanger heat-utilization device comprising a chemical thermal storage medium molded body molded from particles of a chemical thermal storage medium, and formed with a flow channel for supplying a reactant to within the chemical thermal storage medium molded body or for discharging a reaction product therefrom, and a heat exchanger structural body, comprising a thermal storage medium accommodation portion in which the chemical thermal storage medium molded body is accommodated, and a heat exchange medium flow channel portion that is partitioned from an interior portion of the thermal storage medium accommodation portion by a partitioning body, with the heat exchange medium flow channel portion allowing a heat exchange medium to flow therethrough, for heat exchange with the chemical thermal storage medium molded body via the partitioning body.

US 2002/0100369 A1 relates to a metal hydride tank apparatus containing a metal hydride, wherein a temperature controllable tank comprises a metal hydride, which discharges the stored hydrogen gas according to the temperature control of the tank, a gas channel, which discharges the hydrogen gas, discharged from the metal hydride, out of said tank, and a baffle, which is placed in the tank and forms said gas channel into sections to flow the hydrogen gas throughout the metal hydride in the tank and discharge the hydrogen gas out of the tank.

The present invention is made in consideration of the foregoing, and it is an object of the invention to provide a chemical heat accumulator in which a chemical heat storage material is restricted in order to limit the volume change of the chemical heat storage material and also to prevent the chemical heat material structure (molded body) from collapsing in conjunction with the volume change, thereby stably-carrying out a reversible reaction that undertakes heat storage and heat release, and a method of producing the chemical heat accumulator.

Solution to Problem

The present inventors have found that when, for example, using a chemical heat storage material structure, the chemical heat storage material structure being a molded body of a chemical heat storage material that repeatedly changes in volume due to expansion and shrinkage accompanying binding or desorption of a heat storing/releasing reaction medium, the phenomenon whereby the chemical heat storage material structure collapses and is not capable of maintaining the initial form due to large volume change (expansion difference) follows from a certain level of volume change and can be suppressed by means of limiting (restricting) significant expansion and shrinkage exceeding this level, thereby preventing collapse and maintaining form. Therefore, the present invention has been made based on this knowledge.

The first aspect of the invention provides a chemical heat accumulator.

Embodiments of the chemical heat accumulator according to the first aspect of the invention include the followings.

<1> The first aspect of the invention provides a chemical heat accumulator including a chemical heat storage material structure that includes a granular chemical heat storage material and a clay mineral and has a polyhedral structure, and a structure restriction member that accommodates the chemical heat storage material structure and restricts each face of the accommodated chemical heat storage material structure at least at a portion of the face, wherein the chemical heat storage material structure has a true density ratio of from 45% to 63%.

In the first aspect of the invention, by bringing each face of plural faces (for example, 6 faces in the case of a hexahedron) possessed by the chemical heat storage material structure in contact with a structure restriction member (for example, wall faces in the interior of the hollow of the structure restriction member in which the chemical heat storage material structure is accommodated) at least at a portion of the face, to be in a state of restricting the space where the chemical heat storage material can expand or shrink, remarkable change in volume of the chemical heat storage material structure is limited and the distance between the particles inside the structure is maintained at an appropriate distance. Specifically, at the time of expansion in volume accompanying binding with a heat storing/releasing reaction medium (for example, water in the case of using a metal hydroxide such as Ca $(OH)_2$), excessive expansion in volume is restricted, and in the chemical heat storage material structure that has once expanded and contacted with the structure restriction member, a state in which the contact faces are adhered to the inner walls of the structure restriction member is formed, and thus, at the time of shrinkage in volume due to desorption of the heat storing/releasing reaction medium, a phenomenon in which the chemical heat storage material structure is pulled by the inner walls which causes excessive shrinkage is restricted.

Further, by the existence of a chemical heat storage material together with a clay mineral, it is possible to organize and impart flexibility utilizing the fibrous form (fiber) having a large specific surface area of a porous clay mineral, whereby structuralization of the chemical heat storage material becomes possible without retarding the migration of water vapor, and thus, granulation of the heat storage material when using, and deterioration in reactivity associated therewith may be suppressed.

Further, with the incorporation of a chemical heat storage material together with a clay mineral, the following effects can be obtained.

Namely, when a clay mineral is incorporated, the excessive water vapor that is present in the system at the heat storing/releasing time adsorbs to the inside of the clay mineral due to the adsorptivity of the clay mineral, and prevents transition to liquid water in the reactor under a low temperature environment. Herewith, sintering caused by the reaction between liquid water and the heat storage material is suppressed. Further, when the heat storage material is stirred together with water, a thickening effect can be obtained due to the thioxotropy of the clay mineral and thus, molding of a structure including a chemical storage material as a base component can be conducted in the state of higher definition and higher density.

As described above, in the present invention, collapse of the chemical heat material structure which is a molded substance can be prevented. With the suppression of collapse, heat conduction routes which depend on the distance between the particles are ensured, a low heat resistance can be obtained, and thermal rate limitation is cancelled, and therefore, a chemical heat storage system having a high thermal efficiency can be constructed.

In the present invention, the term "restriction" means that remarkable expansion and shrinkage when using the chemical heat storage material structure or the like is limited. Specifically, it means that a state, in which the change in volume of the chemical heat storage material structure is limited at predetermined faces, is formed in the chemical heat storage material structure, to an extent necessary for suppressing the collapse of the chemical heat storage material structure which is caused by the difference between the shrinkage of the chemical heat storage material structure due to desorption (for example, dehydration) of a heat storing/releasing reaction medium (for example, water) and the expansion of the chemical heat storage material structure accompanying binding (for example, hydration) of the heat storing/releasing reaction medium. It is preferable that the chemical heat storage material structure is accommodated in the structure restriction member in a state such that the true density ratio of the chemical heat storage material structure is within the range of from 45% to 63%.

<2> Embodiment of the chemical heat accumulator according to the first aspect of the invention includes a chemical heat accumulator described in the item <1>, wherein then structure restriction member has a hollow portion having a form which is the same as or homothetic to the form of the polyhedral structure of the chemical heat storage material structure, the chemical heat storage material structure is accommodated in the hollow portion, and each face the accommodated chemical heat storage material structure is restricted by an inner walls of the hollow portion.

Since the form of the hollow portion of the structure restriction member that restricts expansion and shrinkage of the chemical heat storage material structure is the same as or homothetic to the form of the chemical heat storage material structure, in a case in which change in volume is caused in the chemical heat storage material structure, the entire structure surfaces (for example, in the case of a hexahedral structure, all of the 6 faces) can be uniformly restricted such that a moiety where expansion or shrinkage easily occur is not included partially. Accordingly, collapse of the chemical heat storage material structure can be further prevented.

<3> Embodiment of the chemical heat accumulator according to the first aspect of the invention includes a chemical heat accumulator described in the item<1> or the item <2>, wherein the structure restriction member has a hollow portion that accommodates the chemical heat storage material structure, and each face of the chemical heat storage material structure is at least brought into contact with an inner wall face of the hollow portion and restricted when binding of a heat storing/releasing reaction medium is saturated in the chemical heat storage material structure.

To be in contact with the inner wall faces of the hollow portion when the binding of the heat storing/releasing reaction medium is saturated (for example, in the case where a metal hydroxide is used as a chemical heat storage material, when the metal hydroxide has been hydrated until maximum hydration) involves the case in which the dimension of the inward form of the hollow portion when the binding has reached the saturated state becomes equal to the dimension of the outward form of the chemical heat storage material structure when the binding of the heat storing/releasing reaction medium is saturated.

When the binding of the heat storing/releasing reaction medium (for example, water in the case of using a metal hydroxide such as $Ca(OH)_2$ as a chemical heat storage material) is saturated (for example, in the case where a metal hydroxide is used as a chemical heat storage material, when the metal oxide has been hydrated until maximum hydration) in the chemical heat storage material structure, the chemical heat storage material structure is in a state in which the volume is mostly expanded. By obtaining a relationship in which the chemical heat storage material structure contacts with or adheres to the wall faces of the hollow portion when the chemical heat storage material structure reaches this state, excess power application to the structure restriction member at the time of volume expansion can be suppressed. Herewith, as described below, the requirements with respect to the structural strength when the wall (hereinafter, also referred to as the restriction wall) of the structure restriction member is formed with a permeation wall that permits permeation of the heat storing/releasing reaction medium or a heat transfer wall having thermal conductivity can be lowered to a minimum level.

Further, in the case of forming a state in which the dimension of the inward form of the hollow portion and the dimension of the outward form of the chemical heat storage material structure when the binding of the heat storing/releasing reaction medium is saturated is made equal, it is possible to maintain an almost constant distance between the particles inside the structure that is in the molding stage. As a result, generation of internal cracks accompanying the expansion and shrinkage of the molded body is suppressed, and also it becomes possible to self-repair the generated cracks. Moreover, by suppressing the distortion such as bending or warping in the outward form, the effect of suppressing external defects can be expected, and even when any.defects occur at the time of shrinkage, it is possible to self-repair by cooperation with the restriction wall at the time of expansion.

<4> According to the present invention, the chemical heat storage material structure that is accommodated in the structure restriction member has a true density ratio of from 45% to 63%.

Since the true density ratio is within the above range, the particles of the chemical heat storage material exhibit binding property to each other, and the distance between the particles is maintained at an appropriate distance. Herewith, the binding reaction of the heat storing/releasing reaction medium (for example, water in the case of using a metal hydroxide such as $Ca(OH)_2$ as a chemical heat storage material) can proceed well; as well as excessive distortion can be suppressed at the time of shrinkage in volume during the dehydration reaction, and it is possible to suppress the interface separation of the chemical heat storage material structure from the inner wall to a low level.

<5> Embodiment of the chemical heat accumulator according to the first aspect of the invention includes a chemical heat accumulator described in any one of the item <1> to the item <4>, wherein a container that has plural walls corresponding to the polyhedral structure of the chemical heat storage material structure and a space that is formed with plural inner wall faces (for example, a hexahedron having an internal hollow formed with 6 walls) is used as the structure restriction member, at least one of the plural walls is a permeation wall that permits permeation of a heat storing/releasing reaction medium, and at least one of the plural walls other than the at least one permeation wall is a heat transfer wall having thermal conductivity.

Since at least one of the walls is a permeation wall that permits permeation of a heat storing/releasing reaction medium (for example, water in the case of using a metal hydroxide such as Ca(OH)$_2$ as a chemical heat storage material), it becomes possible to undergo a reaction (for example, a hydration reaction) in which the resistance to passage of the heat storing/releasing reaction medium can be suppressed to a low level and, as a result, higher efficiency and higher output in chemical heat storage can be achieved. Further, since at least one of the walls is a heat transfer wall, heat exchange can be conducted well.

<6> Embodiment of the chemical heat accumulator according to the first aspect of the invention includes a chemical heat accumulator described in any one of the item <1> to the item <5>, wherein the chemical heat storage material is a hydration reactive heat storage material that absorbs heat in conjunction with a dehydration reaction and releases heat in conjunction with a hydration reaction.

When the chemical heat storage material is such a hydration reactive heat storage material, defects such as cracks or distortion, which may easily occur due to the change in volume when the degrees of volume expansion and volume shrinkage that occur at the time of heat absorption and heat generation are large, and deterioration in reactivity associated therewith can be effectively prevented. Further, when a hydroxide that has been subjected to hydration reaction is used as the starting material of the chemical heat storage material, it becomes possible to use water as a binder for mixing and thickening, and baking with a high temperature of near 1000°C that is needed at the decarboxylation process as in the case of using a carbonic acid compound becomes unnecessary. Therefore, degrees of variance of base materials to be used and processes are greatly increased in the chemical heat accumulator or in the chemical heat storage system using the chemical heat accumulator.

Moreover, by utilizing an inorganic compound as the chemical heat storage material, the material stability in the heat storing reaction may be enhanced, and a safer material with less environmental burden may be selected, and therefore, safety involving safety in production, use, and recycle can be ensured.

<7> Embodiment of the chemical heat accumulator according to the first aspect of the invention includes a chemical heat accumulator described in any one of the item <1> to the item <6>, wherein the chemical heat storage material is a hydroxide of an alkaline earth metal.

By using a hydroxide of an alkaline earth metal as the chemical heat storage material, the effects of the present invention are more effectively realized, since the volume change is large and, and further, the material stability against heat storing/heat releasing reaction (hydration/dehydration) is high. Therefore, a stable heat storage effect can be obtained over a long-term.

<8> Embodiment of the chemical heat accumulator according to the first aspect of the invention includes a chemical heat accumulator described in any one of the item <1> to the item <7>, wherein the clay mineral has a laminated ribbon structure.

The clay mineral having a laminated ribbon structure is a clay mineral (layered silicate mineral) that forms a tetrahedral ribbon obtained by binding plural single chains like pyroxene, and can gives viscosity to the chemical heat storage material, can form a porous structure; and can maintain the structure strength of the structure at a high strength. Further, the clay mineral having a laminated ribbon structure can also impart diffusivity of water vapor.

<9> Embodiment of the chemical heat accumulator according to the first aspect of the invention includes a chemical heat accumulator described in any one of the item <1> to the item <8>, wherein the clay mineral is at least one selected from the group consisting of sepiolite, palygorskite, and bentonite.

When at least one selected from the group consisting of sepiolite, palygorskite (attapulgite), and bentonite is used, since occurrence of sintering (agglomerization) may be relatively low in these, and since these are clay minerals having relatively strong adhesive force, the bond strength to, for example, a metal wall may be easily ensured, and a porous structure in which pores are formed among particles of a chemical heat storage material may be obtained easily. Above all, sepiolite and palygorskite are preferable in view of the fact that the decrease in specific surface area due to sintering is smaller, and a strong porous structure can be obtained from the simple substance since the adhesive force is strong.

<10> Embodiment of the chemical heat accumulator according to the first aspect of the invention includes a chemical heat accumulator described in any one of the item <1> to the item <9>, wherein the chemical heat storage material is a hydroxide, and the clay mineral has a fiber length equal to or greater than the particle diameter of the hydroxide when the hydroxide has been subjected to hydration until maximum hydration.

When the clay mineral contained has a fiber length equal to or more than the particle diameter of the hydroxide that has been subjected to hydration, a form in which particles are included in the network of fiber can be provided, which is preferable.

Further, the second aspect of the present invention provides a method for producing the chemical heat accumulator. Embodiments of the method for producing the chemical heat accumulator according to the second aspect of the present invention include the followings.

<11> According to the second aspect of the invention, a method for producing a chemical heat accumulator is provided, the method including accommodating a chemical heat storing material structure that includes a granular chemical heat storage material and a clay mineral and has a polyhedral structure, after desorbing at least a portion of a heat storing/releasing reaction medium that is bonded to the chemical heat storage material structure, in a structure restriction member that has an internal hollow and restricts each face of the chemical heat storage material structure at least at a portion of the face, wherein the chemical heat storage material structure has a true density ratio of from 45% to 63%.

In the second aspect of the present invention, in the shrinkage state in which the heat storing/releasing reaction medium in the chemical heat storage material structure is desorbed, since the volume of the chemical heat storage material structure is reduced, storage in the structure restriction member can be carried out easily.

Then, after the chemical heat storage material structure having reduced volume is accommodated in the structure restriction member, the heat storing/releasing reaction medium is supplied and is bonded, thereby the volume is expanded. Thus, the chemical heat storage material structure adheres to the wall faces of the interior of the hollow of the structure restriction member, and when the adhesion is enhanced, a restriction state is formed. Even if the structure shrinks thereafter, the adherance to the wall faces is maintained, and therefore the restriction effect can be obtained also at the time of desorption.

<12> Embodiments of the method for producing the chemical heat accumulator according to the second aspect of the invention include a method for producing a chemical heat accumulator described in item <11>, wherein the structure restriction member has a hollow portion having a form which is the same as or homothetic to the form of the polyhedral structure of the chemical heat storage material structure and, in the accommodating of the chemical heat storage material structure in the structure restriction member, the chemical heat storage material structure is accommodated in the structure restriction member in a state in which the chemical heat storage material structure from which at least a portion of the heat storing/releasing reaction medium has been desorbed and the hollow portion of the structure restriction member have the same homothetic ratio in each pair of corresponding faces (for example, in the case of a hexahedron, a state in which a ratio of two corresponding sides of the chemical heat storage material structure and the hollow portion of the structure restriction member is the same in each of the three axis directions of the three dimensional coordinate axes (X, Y, and Z axes)).

When the form of the hollow portion of the structure restriction member and the form of the polyhedral structure of the chemical heat storage material structure to be accommodated in the hollow portion are the same form or are in a homothetic relationship, and a process is provided of accommodating the chemical heat storage material structure in a state in which the chemical heat storage material structure and the hollow portion that accommodates this structure have the same homothetic ratio in each pair of corresponding faces, restriction of the accommodated chemical heat storage material structure can be conducted with equal weighting.

Advantageous Effects of Invention

According to the present invention, it is possible to provide a chemical heat accumulator in which a chemical heat storage material is restricted in order to limit the volume change of the chemical heat storage material and also to prevent the chemical heat material structure (molded body) from collapsing in conjunction with the volume change, thereby stably carrying out a reversible reaction that undertakes heat storage and heat release, and a method of producing the chemical heat accumulator.

BRIEF DESCRIPTION OF DRAWINGS

Fig. 1 is a perspective view showing a chemical heat accumulator according to an embodiment of the present invention.

Fig. 2 is a deal drawing that shows the structure of the chemical heat accumulator shown in Fig. 1 in a decomposed form.

Fig. 3 is a photograph showing the state in which two L shaped jigs that support the molded body are arranged at an interval.

Fig. 4A is a sectional view schematically showing the surface property of a chemical heat storage material structure by means of variation in thickness (irregular state), and Fig. 4B is a graph showing the ratio (thickness error; %) of the thickness variation (maximum thickness - minimum thickness) relative to the target thickness in Fig. 4A by changing the true density ratio.

DESCRIPTION OF EMBODIMENTS

Hereinbelow, embodiments of the chemical heat accumulator according to the present invention are explained in detail with reference to the drawings, and also, through the explanation, embodiments of the method for producing the chemical heat accumulator according to the present invention are described in detail. It should be noted that, in the following embodiments, the form in which calcium hydroxide ($Ca(OH)_2$) which is a hydroxide of an alkaline earth metal is used as the chemical heat storage material and sepiolite is used as the clay mineral is mainly explained. However, the present invention is not limited to the following embodiments.

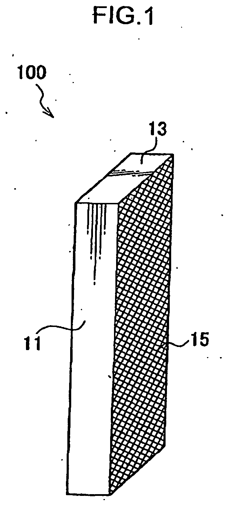

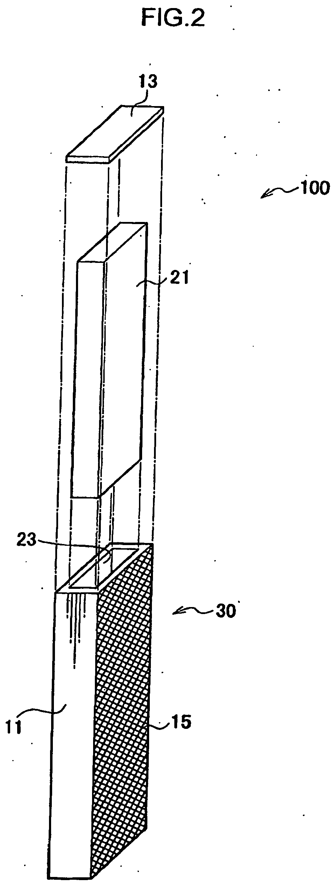

The embodiments of the chemical heat accumulator and the production method thereof of the present invention are explained in reference to Fig. 1 and Fig. 2. In the present embodiment, a granular substance of $Ca(OH)_2$ is used as the chemical heat storage material, and a chemical heat storage material structure, which is prepared by molding this granular substance into a rectangular cuboid that is a hexahedron, is accommodated in a hexahedral container which has 6 walls, two wide walls among which each being formed with non-woven fabric (permeation wall) that permits permeation of a water (heat storing/releasing reaction medium), and the other four side walls each being formed with a stainless steal board (heat transfer wall) having thermal conductivity, to restrict all the 6 faces of the structure with the 6 walls.

As shown in Fig. 1 and Fig. 2, the chemical heat accumulator 100 according to the present embodiment includes a structure restriction container (structure restriction member) 30, which is configured to have a hexahedral structure having an internal hollow by using two long stainless steel materials 11 with a narrow width, two short stainless steel materials 13 with a narrow width, and two moisture permeation walls 15 that are prepared by fitting up with non-woven fabric in which synthetic fiber is used at a frame material (not shown in the figure) made of stainless steal, and a rectangular cuboid of $Ca(OH)_2$ structure 21, which is accommodated in the structure restriction container and is prepared by.molding the $Ca(OH)_2$. powder in accordance with the press molding method.

As shown in Fig. 1 and Fig. 2, the structure restriction container 30 is formed with four heat transfer walls that form a non-end frame structure with the stainless steel materials 11 and the stainless steel materials 13, and two moisture permeation walls (permeation walls) 15 that are prepared by fitting up with non-woven fabric at the frame material (not shown in the figure) made of stainless steal. The four heat transfer walls are provided as side walls having thermal conductivity, in a state of being linked together. The 6 faces of the $Ca(OH)_2$ structure 21 are in a state of being at least in contact with the 6 inner wall faces of the structure restriction container 30. When the $Ca(OH)_2$ structure 21 expands due to the hydration reaction, the outward form of the structure is restricted by the inner walls of the structure restriction container 30, thereby maintaining the form of the structure, and adhesion to the inner walls is increased and thus, the heat can be released to the outside through the heat transfer walls. Further, the volume expansion at the time of hydration reaction is absorbed by the small spaces between the $Ca(OH)_2$ structure and the inner walls, and the spaces for the pore volume in the structure. On the contrary, when the $Ca(OH)_2$ structure 21 shrinks due to the dehydration reaction, by the adhesion of the structure to the inner walls, the shrinkage is limited, whereby the form is maintained.

The moisture permeation walls 15 are made of non-woven fabric prepared by using synthetic fiber and are jointed with the stainless steel materials 11 and the stainless steel materials 13 at a portion of the frame material thereof. With the moisture permeation walls 15, migration of water which is generated during the hydration reaction or dehydration reaction at the $Ca(OH)_2$ structure 21 which is accommodated in the interior of the structure restriction container 30 becomes possible.

For the moisture permeation walls 15, a plate-like material having pores capable of permitting permeation of water can be used without limitation, and the material may be, for example, a mesh material made of stainless steel (for example, SUS316L). In this case, the mesh size is not particularly limited, but is preferably in a range of from 200 mesh to 400 mesh. Further, the material is not limited to a mesh-like material, and a material that is provided with pores having another, arbitrary selected, form can be used. For example, a material that is provided with circular pores at predetermined intervals may be used.

The material of the moisture permeation walls may be any material that can follow or limit the expansion arid shrinkage of the chemical heat storage material structure (for example, in the present embodiment, the $Ca(OH)_2$ structure), and a material which is less likely to cause corrosion, softening or the like, or deterioration such as rusting or the like by the heat storing/releasing reaction medium (for example, in the present embodiment, water) is preferred. Specifically, a metal material such as a stainless steel material or an aluminum material, a resin material, or the like may be used.

As for the stainless steel materials 11 and stainless steel materials 15, a material which is less likely to cause corrosion, softening or the like, or deterioration such as rusting or the like by the heat storing/releasing reaction medium (for example, in the present embodiment, water) and can impart thermal conductivity is preferable. Examples thereof include a metal material such as a stainless steel material or an aluminum material.

The interior of the hollow of the structure restriction container 30 is formed with 6 inner wall faces and has a size of 50 mm $\times$ 30 mm $\times$ 3 mm, and as described below, the internal dimension of the hollow portion is almost the same size as the size of the $Ca(OH)_2$ structure 21.

The size of the interior of the hollow can be arbitrary selected according to the purpose, the kind (namely, expansion/ shrinkage ratio) of the chemical heat storage material structure (for example, in the present embodiment, the $Ca(OH)_2$ structure) to be accommodated, and the volume.

The structure restriction container 30 in the present embodiment accommodates the $Ca(OH)_2$ structure 21 and restricts the entire 6 faces thereof, such that remarkable volume expansion or volume shrinkage does not occur at the time of heat absorption accompanying the dehydration reaction or heat releasing accompanying the hydration reaction.

The expression "the $Ca(OH)_2$ structure 21 is restricted" means that remarkable expansion and shrinkage occurring when using the $Ca(OH)_2$ structure 21 or the like is limited. In the present embodiment, it means that a state; in which the change in volume is limited to a small amount, is formed by bringing the $Ca(OH)_2$ structure 21 in contact with the structure restriction container 30, to an extent necessary for suppressing the collapse of the $Ca(OH)_2$ structure 21 which is caused by the difference between the shrinkage of the $Ca(OH)_2$ structure 21 when undergoing a dehydration reaction (desorption of a heat storing/releasing reaction medium) and the expansion of the $Ca(OH)_2$ structure 21 when undergoing a hydration reaction (binding of a heat storing/releasing reaction medium).

- Chemical Heat Storage Material -

The $Ca(OH)_2$ structure 21 is a molded body which is obtained by press molding a granular substance (having an average primary particle diameter of from 6 $\mu$m to 8 $\mu$m) of $Ca(OH)_2$, that is a chemical heat storage material, and has a true density ratio of 57%. Chemical heat storage materials are substances which can absorb and release heat by utilizing chemical reactions. The chemical heat storage material is present in the interior of the structure in the form of powder. The expression "the chemical heat storage material is in the form of particles or is granular" means that the chemical heat storage material is in the state of powder including particles.

Examples of the chemical heat storage material may include inorganic hydroxides of alkaline earth metals such as calcium hydroxide ($Ca(OH)_2$), magnesium hydroxide ($Mg(OH)_2$), barium hydroxide ($Ba(OH)_2$), and hydrates thereof ($Ba(OH)_2H_2O$), inorganic hydroxides of alkaline metals such as lithium hydroxide monohydrate ($LiOH \cdot H_2O$), and inorganic oxides such as aluminum oxide trihydrate ($Al_2O_3.3H_2O$). Among them, a hydration reactive heat storage material that absorbs heat in conjunction with a dehydration reaction and releases heat in conjunction with a hydration reaction is preferable, and particularly, calcium hydroxide ($Ca(OH)_2$) is preferable.

Further, a commercially available product in the market may be used as the chemical heat storage material.

Here, the storage of heat and release of heat are explained by way of example with reference to calcium hydroxide ($Ca(OH)_2$).

$Ca(OH)_2$, which is a heat storage material, has a configuration of storing heat (absorbing heat) in conjunction with dehydration and releasing heat (generating heat) in conjunction with hydration (restoration to calcium hydroxide). Namely, $Ca(OH)_2$ can reversibly repeat storage and release of heat according to the following reaction.

$$Ca(OH)_2 \leftrightarrow CaO + H_2O$$

Further, when the amount Q of heat storage/ heat radiation is added to the formula, the following formulae can be obtained.

$$Ca(OH)_2 + Q \rightarrow CaO + H_2O$$

$$CaO + H_2O \rightarrow Ca(OH)_2 + Q$$

The average particle diameter of the granular chemical heat storage material is, by average primary particle diameter, preferably 10 $\mu$m or less, and more preferably 1 $\mu$m or less. The lower limit of the average primary particle diameter is preferably 0.1 $\mu$m. The average primary particle diameter of the chemical heat storage material is measured using a laser diffraction/scattering particle size distribution analyzer, SALD-2000A (trade name, manufactured by Shimadzu Corporation) in accordance with the laser diffraction/scattering method.

The true density ratio of the $Ca(OH)_2$ structure 21 is 57%. According to the present invention, the true density ratio of the chemical heat storage material structure is adjusted to be within the range of from 45% to 63%. The true density ratio indicates how much the substantial ratio of the compositions that constitute the structure excluding the pore is. The fewer the number of pores is, the higher the true density ratio is. Since the true density ratio is within the range of from 45% to 63%, then particles of the chemical heat storage material show binding property to each other, and the distance between the particles can be maintained at an appropriate distance. Specifically, when the true density ratio is 45% or higher, the change in volume can be suppressed to an extent such that collapse of the structure or the like does not occur. When the true density ratio is 63% or lower, allowable volume that allows volume expansion may be ensured and good reactivity may be obtained.

Herewith, the hydration reaction (the binding reaction of the heat storing/releasing reaction medium) in the $Ca(OH)_2$ structure 21 can proceed satisfactorily, as well as excessive distortion can be suppressed at the time of volume shrinkage during the dehydration reaction, and interface separation of the $Ca(OH)_2$ structure 21 from the inner wall can be suppressed to a low level.

The true density ratio of the chemical heat storage material structure in the present invention is more preferably in a range of from 51% to 60%, and is particularly preferably in a range of from 55% to 59%.

The true density ratio is a value determined by measuring the mass [g] and volume [mL] of the chemical heat storage material structure, and calculating based on the measured values according to the following equation.

$$\text{True Density Ratio [\%]} = (\text{Mass/Volume}) / \text{True Density} \times 100$$

Further, the $Ca(OH)_2$ structure 21 is formed to have a size of 50 mm $\times$ 30 mm $\times$ 3 mm, and by being molded to have the same size as the internal dimension of the structure restriction container 30, a restriction state is formed, and thus, it is possible to maintain an almost constant distance between the particles of the heat storage material powder at the time of molding. As a result, generation of internal cracks accompanying the volume expansion and shrinkage of the $Ca(OH)_2$ structure 21 is suppressed, and also it becomes possible to self-repair the generated internal cracks. Moreover, by suppressing the distortion such as bending or warping of the outward form, the effect of suppressing external defects can be expected, and an effect of self-repairing the defects at the time of expansion, the defects being generated at the time of shrinkage, is obtained.

From this point of view, the case in which the outer dimension of the chemical heat storage material structure that has been subjected to press molding is the same as or within the range that can be recognized as same as the inner dimension of the structure restriction container is preferable. In an embodiment, the outward form of the chemical heat storage material structure that has been subjected to press molding may be in a homothetic relationship with the form of the interior of the hollow of the structure restriction container, may be adopted. In this case, it is preferable that the chemical heat storage material structure from which at least a portion of the heat storing/releasing reaction medium has been desorbed and the hollow portion of the structure restriction container have the same homothetic ratio in each pair of corresponding faces. When the chemical heat storage material structure from which at least a portion of the heat storing/releasing reaction medium has been desorbed and the hollow portion of the structure restriction container have the same homothetic ratio in each pair of corresponding faces (in other words, when the chemical heat storage material structure from which at least a portion of the heat storing/releasing reaction medium has been desorbed and the hollow portion of the structure restriction container are in a homothetic relationship), in the case of accommodating the chemical heat storage material structure and allowing expansion and shrinkage of the chemical heat storage material structure when using, a good adhesion can be obtained against the inner wall faces of the hollow portion of the structure restriction container. The term "homothetic ratio" indicates a ratio of two corresponding sides of the contrasting forms which are in a homothetic relationship, and the ratio (homothetic ratio) is the same in each pair of corresponding sides of the contrasting forms when the contrasting forms are in a homothetic relationship. In the case of, for example, a hexahedron, to have a homothetic relationship means that the ratio of two corresponding sides of the contrasting forms is the same in each of the three axis directions of the three dimensional coordinate axes (X, Y, and Z axes). In this case, when the chemical heat storage material structure expands or shrinks, the faces are equally restricted in the structure restriction container 30. In addition, from the same reason as that described above, it is preferable that a chemical heat storage material structure of a hydroxide of an alkaline earth metal such as $Ca(OH)_2$ structure is used, and the chemical heat storage material structure is filled to give a true density ratio within the range of from 55% to 59%.

The content ratio of the chemical heat storage material in the chemical heat storage material structure is, by volume ratio, preferably 50% by volume or higher with respect to the total volume of the structure (50% by mass or higher with respect to the total mass of the structure), and more preferably 90% by volume or higher (90% by mass or higher with respect to the total mass of the structure). When the content of the chemical heat storage material is 50% by volume or higher or 50% by mass or higher, the heat absorption/ radiation amount can be maintained at a high level.

- Clay Mineral -

The $Ca(OH)_2$ structure (chemical heat storage material structure) 21 includes a granular chemical heat storage material (and, as necessary, an organic binder described below), and sepiolite as the clay mineral. When a clay mineral is contained, a structure in which the clay mineral exists among the particles of the chemical heat storage material may be obtained. A structure in which the clay mineral forms a porous skeleton structure and the particles of the chemical heat material is dispersed and held in the porous skeleton structure may be formed. In the structure, the chemical heat storage material particles are held in a dispersed state, and since the structure has excellent water vapor diffusivity owing to the porous structure, the above reactions are easily caused in many particles.

As the clay mineral, any clay mineral may be selected, but it is preferable that the clay mineral includes at least one clay mineral having a laminated ribbon structure. The clay mineral having a laminated ribbon structure is a clay mineral (layered silicate mineral) that forms a tetrahedral ribbon obtained by binding plural single chains like pyroxene, and gives viscosity to the chemical heat storage material, forms a porous structure, and can maintain the structure strength of the structure at a high strength. Further, the clay mineral having a laminated ribbon structure can also impart diffusivity of water vapor.

Examples of the clay mineral includes sepiolite [a hydrated magnesium silicate represented by $Mg_8Si_{12}O_{30}(OH)_4 \cdot (OH_2)_4 \cdot 8H_2O$], attapulgite [palygorskite; = a hydrated magnesium aluminum silicate having a palygorskite structure represented by $(Mg \cdot Al)_2Si_4O_{10}(OH) \cdot 4H_2O$, a wire diameter of 5 $\mu$m or less], kaolinite [kaoline; = an aluminum silicate represented by $Al_2(Si_2O_5)(OH)_4$, a wire diameter of 1 $\mu$m or less], and bentonite. One type of these clay minerals may be used alone, or two or more types of them may be used in combination.

Further, as the clay mineral, a commercially available product in the market may be used.

Among the clay minerals described above, sepiolite, palygorskite, and bentonite are preferable, since occurrence of sintering (agglomerization) is relatively low and these clay minerals have strong adhesive force, whereby, for example, the bond strength to a metal face may be easily obtained, and a porous structure in which pores are formed among particles of a chemical heat storage material may be easily obtained. Among them, sepiolite and palygorskite each having a laminated ribbon structure are more preferable. Clay minerals having a laminated ribbon structure are advantageous in that they cause few sintering (agglomerization), as compared with bentonite which does not belong in this class.

Especially, sepiolite is advantageous in that it is sintered at a temperature near the dehydration temperature of the chemical heat storage material and, at the above temperature, the decrease in specific surface area due to sintering is smaller. Clay minerals easily form a skeleton structure since they have a fibrous structure. By taking such advantages into consideration, a clay mineral may be selected as appropriate depending on the intended use or the like.

The chemical heat storage material structure (for example, in the present embodiment, the $Ca(OH)_2$ structure 21) may contain bentonite which does not belong to the clay minerals having a laminated ribbon structure. Further, bentonite and another clay mineral may be mixed.

Bentonite is a clay mineral having a high adhesive force as compared with the clay minerals having a laminated ribbon structure, and thus, a strong porous structure can be obtained using bentonite only (in other words, using bentonite in the state of not being mixed with another clay mineral). Further, bentonite contributes to the enhancement of the bond strength to, for example, a metal wall, and even using a composition including bentonite, a porous structure in which pores are formed among the powders of the chemical heat storage material can be obtained.

In the present invention, a clay mineral prepared by mixing a clay mineral having a laminated ribbon structure and bentonite may be mixed with a granular chemical heat storage material. In this case, the percentage of bentonite is preferably from 10% by mass to 40% by mass with respect to the clay mineral having a laminated ribbon structure.

The content of the clay mineral in the chemical heat storage material structure (for example, in the present embodiment, the $Ca(OH)_2$ structure 21) is preferably in a range of from 5% by mass to 40% by mass, and more preferably in a range of from 10% by mass to 35% by mass, with respect to the total mass of the structure. When a mixture of two or more types of clay minerals is used (for example, in the case where bentonite and another clay mineral are used in combination, as described above), these preferable ranges of the content mean the preferable ranges of the total content of the mixture. When the content of the clay mineral is 5% by mass or higher, a higher structure strength may easily be obtained, and when the content is 40% by mass or lower, a higher amount of heat absorption/ heat radiation may easily be obtained.

- Organic Binder -

The chemical heat storage material structure (for example, in the present embodiment, the $Ca(OH)_2$ structure 21) may be molded using an organic binder together with the granular chemical heat storage material (for example, in the present embodiment, $Ca(OH)_2$).

Generally, particles of granular chemical heat storage materials do not stick each other well, and it is hard to mold the materials. Therefore, in order to impart structure molding property, an organic binder (binding component) may be used in combination with the granular chemical heat storage material. When using an organic binder, crystal control, porosity, and the like can also be enhanced.

Preferable examples of the organic binder include cellulose resins, examples thereof including modified or unmodified polyvinyl alcohols (PVA) and carboxymethyl cellulose; urethane resins, examples thereof including aqueous urethanes; resin components, examples thereof including starch, and solvent components, examples thereof including diethylene glycol (DEG) and ethanol.

-Other Components -

The chemical heat storage material structure (for example, in the present embodiment, the $Ca(OH)_2$ structure 21) may include, other than the components described above, one or more other components such as unavoidable impurities or additives, according to the circumstances.

Next, the method for producing the chemical heat accumulator 100 according to the present embodiment is described.

In the production of the chemical heat accumulator 100 according to the embodiment of the present invention, first, $Ca(OH)_2$ which is used as the granular chemical heat storage material having an average primary particle diameter of d $\mu$m, and sepiolite which is used as the clay mineral are mixed, and then the mixture is subjected to press molding to prepare a rectangular cuboid of $Ca(OH)_2$ structure (chemical heat storage material structure) 21 having a size of 50 mm × 30 mm × 3 mm as shown in Fig. 2 (hereinafter, this process is also referred to as a "structure preparation process").

The molding conditions at the time of press molding may be selected as appropriate according to the composition or properties of the chemical heat storage material and the form thereof such as thickness or the like.

In the structure preparation process in the present embodiment, a $Ca(OH)_2$ powder is subjected to press molding to form a molded body, but it is not always necessary to prepare by conducting press molding, and a commercially available $Ca(OH)_2$ molded body may also be used. The molding processing is not limited to the press molding, and another molding method may be used for conducting molding processing.

As shown in Fig. 2, a pillar-shaped structure restriction container (structure restriction member) 30, which has a size of 50 mm × 30 mm × 3 mm and has a rectangular cross section, is prepared.

Thereafter, a portion of hydrated water is desorbed from the obtained $Ca(OH)_2$ structure 21 to cause volume shrinkage, thereby reducing the volume of the structure to have a size of, for example, 49 mm × 29.4 mm × 2.94 mm, and then the resulting $Ca(OH)_2$ structure is inserted into the structure restriction container 30 from the opening left at one end (23), followed by closing the openings left at the end and another end of the structure restriction container 30 with lid materials 13 (hereinafter, this process is also referred to as a "structure storage process").

As shown in Fig. 1 and Fig. 2, the structure restriction container 30 is formed with four heat transfer walls that form a non-end form with the stainless steel materials 11 and the stainless steel materials 13, and two moisture permeation walls (permeation walls) 15 that are prepared by fitting up with non-woven fabric made of synthetic fiber at the frame material (not shown in the figure) made of stainless steal. In this process, the 6 faces of the $Ca(OH)_2$ structure 21 do not stick to, but are in contact with the 6 inner wall faces of the structure restriction container 30. When the $Ca(OH)_2$ structure 21 undergoes a hydration reaction and expands, the outward form of the structure is restricted by the inner walls, thereby maintaining the form, and adhesion to the inner walls is increased and thus, the heat can be released to the outside through the heat transfer walls. Further, the volume expansion at the time of hydration reaction is absorbed by the small spaces between the $Ca(OH)_2$ structure and the inner walls, and the spaces for the pore volume in the structure.

In the present embodiment, in this manner, a chemical heat accumulator, in which 6 faces of the $Ca(OH)_2$ structure 21 that is the chemical heat storage material structure are restricted by the 6 inner wall faces of the structure restriction container 30, is prepared.

EXAMPLES

Hereinbelow, the present invention is described more specifically with reference to Examples, but the invention is by no means limited to the following Examples unless they are beyond the spirit of the invention.

Example 1

(1) Preparation of Suspension of Heat Storage Material

As the chemical heat storage material, white powder (JIS R 9001; grade: special grade) of calcium hydroxide ($Ca(OH)_2$) having an average primary particle diameter of 0.8 $\mu$m was prepared, and this white powder was mixed with ion exchanged water to give a 10% liquid (on the basis of mass), and the mixture was stirred for 4 minutes using a stirrer, to prepare a 10% by mass suspension of the chemical heat storage material.

The average primary particle diameter was measured using a laser diffraction/scattering particle size distribution analyzer, SALD-2000A (trade name, manufactured by Shimadzu Corporation) in accordance with the laser diffraction/scattering method.

(2) Preparation of Suspension of Sepiolite

As the clay mineral, sepiolite powder from Turkey was prepared, and this clay mineral was mixed with ion exchanged water to give a 3% by mass liquid, and the liquid was subjected to aging (standing still) for two days without stirring, to prepare a suspension of sepiolite. Concerning the amount of mixed sepiolite, a limit concentration in thickening was seen when the concentration of sepiolite was 3% by mass. The limit concentration in thickening was determined from the change in the increase of viscosity when increasing the concentration of sepiolite.

(3) Preparation of Mixed Powder

The suspension of the heat storage material and the suspension of sepiolite, which were obtained as described above, were mixed such that the concentration of sepiolite was 10% by mass with respect to the total mass after mixing, and the mixture was stirred for 30 seconds with a stirrer. After the stirring was completed, the resulting mixture was subjected to suction filtration, followed by drying and grinding, to obtain mixed powder.

The average primary particle diameter of the $Ca(OH)_2$ powder in the resulting mixed powder was measured using SALD-2000A (trade name) manufactured by Shimadzu Corporation in accordance with the laser diffraction/ scattering method, and was revealed to be 30 $\mu$m.

(4) Molding

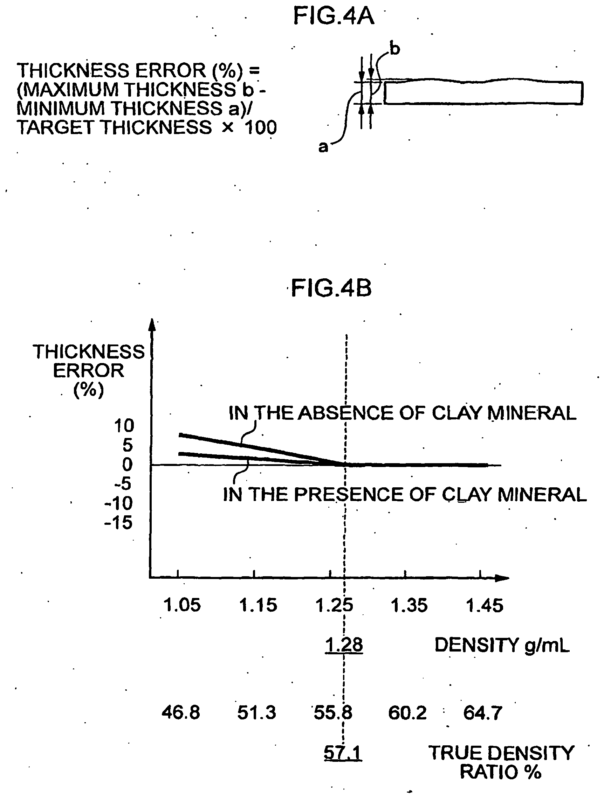

To the mixed powder obtained as described above, a 2% by mass aqueous solution of polyvinyl alcohol (manufactured by JAPAN VAM & POVAL CO., LTD.) as the binder was added in an amount of 50% by mass of the mixed powder, and the mixture was subjected to granulation to give a secondary particle diameter of 1 mm or less, followed by drying. About 15% by mass of the resulting particles were weighed, and subjected to uniaxial press molding at 44 MPa for 30 seconds under ordinary temperature (25°C), to obtain a molded body having a size of 50 mm × 30 mm × 3 mm. In this process, the true density ratio was adjusted in the range of from 46.8% to 64.7% (in this case, the density is from 1.05 to 1.45) by controlling the press pressure or the like during molding, thereby preparing plural molded bodies. The details are described in Fig 4A and Fig 4B.

The secondary particle diameter was determined by cutting the molded body into a desired size, and observing the cross section using a scanning electron microscope (SEM).

(5) Baking

Subsequently, each of the molded bodies was subjected to a heating treatment (baking) at 700°C for 60 minutes, whereby the $Ca(OH)_2$ in the molded bodies was dehydrated and the PVA was removed, and at the same time, the calcium carbonate in the atmosphere was decomposed to perform decarboxylation.

Then, the molded body which had been subjected to the heating treatment as described above, was set in predetermined jigs capable of supporting the 6 faces of the molded body.

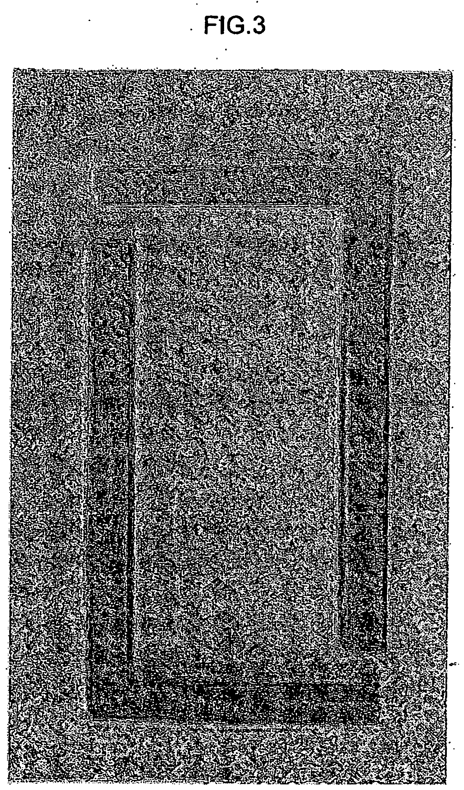

Specifically, non-woven fabric made of synthetic fiber was fixed at one face of a stainless steel board and, on the non-woven fabric, two L shaped jigs made of stainless steel were arranged and placed such that the long sides and the short sides thereof face each other, respectively, as shown in Fig. 3, and then the molded body was set in the place(50 mm × 30 mm × 3 mm in thickness) surrounded by the L shaped jigs. Subsequently, another stainless steel board fitted up with non-woven fabric at one face was prepared, and the stainless steel board with the non-woven fabric was placed on the molded body such that the non-woven fabric face contacts with the molded body. In this way, the molded body was set such that the two plane faces of the molded body was supported by the gas permeable permeation wall made of non-woven fabric, and the four side faces were supported by the L shaped jigs.

The molded body in the state in which the 6 faces thereof were covered as described above was maintained at 200°C for 30 minutes, and was allowed to undergo a hydration reaction. Thereafter, the molded body was heated again to a temperature of 500°C and maintained for 15 minutes (dehydration and baking), and then the temperature was lowered and was maintained at 200°C (hydration). In this manner, the operation of raising and lowering the temperature to perform baking and hydration was repeated 4 times.

At last, after performing baking and undergoing the dehydration reaction, the molded body was peeled off from the non-woven fabric and taken out, thereby obtaining a chemical heat storage material structure. The obtained chemical heat storage material structure had been molded to have a size of 50 mm × 30 mm × 3 mm when the chemical heat storage material has been hydrated until maximum hydration.

The obtained chemical heat storage material structure was inserted in a pillar body, which was formed from a stainless steel material (SUS316L) and had a size of 50 mm × 30 mm × 3 mm and a rectangular cross section, as shown in Fig. 2. The bottom portion and the top portion in the inserting direction were closed with lid materials 13 made of SUS316L. In this way, a chemical heat accumulator 100 was prepared.

In the chemical heat accumulator thus obtained, the volume of the chemical heat storage material structure expands after the hydration reaction is caused and heat is generated when using or the like, thereby forming the state of being stuck to the pillar body and the lid materials. After the state of being stuck to the pillar body and the lid materials has been formed, the adhesion state is maintained also at the time of shrinkage, and thus, the volume change caused by expansion and shrinkage is suppressed.

With regard to the chemical heat accumulator prepared, the operation of raising and lowering the temperature to perform baking and hydration was repeated 4 times. Thereafter, the chemical heat storage material structure was taken out from the pillar body, and the surface irregularities were measured using a pair of vernier calipers. Results are shown in Fig. 4A and Fig. 4B. As shown in Fig. 4A, the thickness error (%) is obtained by the following formula.

$$\text{Thickness error (\%)} = (\text{maximum thickness b} - \text{minimum thickness a})/\text{target thickness} \times 100$$

Comparative Example 1

An operation that is substantially the same as the operation in Example 1 was tried except that sepiolite that is the clay mineral in Example 1 was not used. As a result, some damages were observed in the structure, at the time of peeling off and taking out the molded body, after setting the molded body in the predetermined jigs that supported the four side faces thereof with the L shaped jigs and repeating the operation of baking and hydration. Thereafter, with regard to the obtained chemical heat accumulator (chemical heat storage material structure), the operation of raising and lowering the temperature to perform baking and hydration was repeated 4 times. Then, the measurement of surface irregularities was tried in a manner substantially the same as that in Example 1.

Comparative Example 2

In the operation in Example 1, the operation of baking and hydration was repeated without setting the molded body in the predetermined jigs that supported the four side faces thereof with the L shaped jigs in Example 1.

As a result, the structure had been already destructed, when the molded body was peeled off and taken out. With regard to the portion which had not been destructed, the measurement of surface irregularities was tried in a manner substantially the same as that in Example 1.

As shown in Fig. 4A and Fig. 4B, destruction of the molded body was suppressed in the Example, in which the chemical heat storage material structure was restricted by predetermined jigs and pillar body. As compared with the Comparative Example in which the preparation was tried without restriction for comparison, variation in thickness related to deflection of the surface, wrinkles, or the like was extremely small, and the form at the time of molding was maintained. This shows that collapse of the form accompanying the expansion and shrinkage when using was prevented. Further, in a case in which the chemical heat storage material was molded together with the clay mineral, the variation in thickness was suppressed to a low level, and the form at the time of molding was maintained more satisfactorily, as compared with the case in which the clay mineral was not used.

As described above, with the chemical heat storage material structure being in a state in which all the 6 faces thereof were each in contact with the metal wall and were restricted, collapse accompanying expansion or the like during the reaction was prevented, and by using a clay mineral in combination, it was possible to further enhance the effect of prevention of collapse.

In the above-described embodiments and examples, $Ca(OH)_2$ and a $Ca(OH)_2$ structure having a hexahedral structure are mainly explained as the chemical heat storage material and the structure thereof. However, the present invention is not limited to the $Ca(OH)_2$ or the hexahedral structure. When a chemical heat storage material other than $Ca(OH)_2$ is used or a polyhedral structure other than the hexahedral structure is made, good results may also be obtained.

**Claims**

1. A chemical heat accumulator (100) comprising:

   a chemical heat storage material structure (21) that includes a granular chemical heat storage material and a clay mineral and has a polyhedral structure; and
   a structure restriction member (30) that accommodates the chemical heat storage material structure (21) **characterised in that** the structure restriction member (30) restricts each face of the accommodated chemical heat storage material structure (21) at least at a portion of the face,
   and wherein the chemical heat storage material structure (21) has a true density ratio of from 45 % to 63 %.

2. The chemical heat accumulator (100) according to claim 1, wherein the granular chemical heat storage material has an average primary particle diameter of 0.1 to 1 $\mu$m.

3. The chemical heat accumulator (100) according to claim 1 or 2, wherein the structure restriction member (30) has a hollow portion having a form which is the same as or homothetic to the form of the polyhedral structure of the chemical heat storage material structure (21), the chemical heat storage material structure (21) is accommodated in the hollow portion, and each face of the accommodated chemical heat storage material structure (21) is restricted by an inner wall of the hollow portion.

4. The chemical heat accumulator (100) according to any one of claims 1 to 3, wherein:

the structure restriction member (30) has a hollow portion that accommodates the chemical heat storage material structure (21); and
each face of the chemical heat storage material structure (21) is at least brought into contact with an inner wall face of the hollow portion and restricted when binding of a heat storing/releasing reaction medium is saturated in the chemical heat storage material structure (21).

5. The chemical heat accumulator (100) according to any one of claims 1 to 4, wherein the structure restriction member (30) has a plurality of walls (11, 13, 15) corresponding to the polyhedral structure of the chemical heat storage material structure (21), at least one of the plurality of walls (11, 13, 15) is a permeation wall (15) that permits permeation of a heat storing/releasing reaction medium, and at least one of the plurality of walls (11, 13, 15) is a heat transfer wall (11, 13) having thermal conductivity.

6. The chemical heat accumulator (100) according to any one of claims 1 to 5, wherein the chemical heat storage material is a hydration reactive heat storage material that absorbs heat in conjunction with a dehydration reaction and releases heat in conjunction with a hydration reaction.

7. The chemical heat accumulator (100) according to any one of claims 1 to 6, wherein the chemical heat storage material is a hydroxide of an alkaline earth metal.

8. The chemical heat accumulator (100) according to any one of claims 1 to 7, wherein the clay mineral has a laminated ribbon structure.

9. The chemical heat accumulator (100) according to any one of claims 1 to 8, wherein the clay mineral is at least one selected from the group consisting of sepiolite, palygorskite, and bentonite.

10. The chemical heart accumulator (100) according to any one of claims 1 to 9, wherein the chemical heat storage material is a hydroxide, and the clay mineral has a fiber length equal to or greater than the particle diameter of the hydroxide when the hydroxide has been subjected to hydration until maximum hydration.

11. A method for producing a chemical heat accumulator (100), the method comprising accommodating a chemical heat storing material structure (21) that includes a granular chemical heat storage material and a clay mineral and has a polyhedral structure, after desorbing at least a portion of a heat storing/releasing reaction medium that is bonded to the chemical heat storage material structure (21), in a structure restriction member (30) that has an internal hollow **characterised in that** the structure restriction member (30) restricts each face of the chemical heat storage material structure (21) at least at a portion of the face, wherein the chemical heat storage material structure (21) has a true density ratio of from 45 % to 63 %.

12. The method for producing a chemical heat accumulator (100) according to claim 11, wherein the granular chemical heat storage material has an average primary particle diameter of 0.1 to 1 $\mu$m.

13. The method for producing a chemical heat accumulator (100) according to claim 11 or 12, wherein:

the structure restriction member (30) has a hollow portion having a form which is the same as or homothetic to the form of the polyhedral structure of the chemical heat storage material structure (21); and
in the accommodating of the chemical heat storage material structure (21) in the structure restriction member (30), the chemical heat storage material structure (21) is accommodated in a state in which the chemical heat storage material structure (21), from which at least a portion of the heat storing/releasing reaction medium has been desorbed, and the hollow portion of the structure restriction member (30) have the same homothetic ratio in each pair of corresponding faces.

**Patentansprüche**

1. Chemischer Wärmespeicher (100), umfassend:

   eine chemische Wärmespeichermaterialstruktur (21), die ein körniges chemisches Wärmespeichermaterial und ein Tonmineral umfasst und eine polyedrische Struktur aufweist, und
   ein Strukturbeschränkungselement (30), das die chemische Wärmespeichermaterialstruktur (21) aufnimmt, **dadurch gekennzeichnet, dass** das Strukturbeschränkungselement (30) jede Fläche der aufgenommenen chemischen Wärmespeichermaterialstruktur (21) mindestens an einem Abschnitt der Fläche beschränkt und wobei die chemische Wärmespeichermaterialstruktur (21) ein tatsächliches Dichteverhältnis von 45 % bis 63 % aufweist.

2. Chemischer Wärmespeicher (100) nach Anspruch 1, bei dem das körnige chemische Wärmespeichermaterial einen durchschnittlichen Primärteilchendurchmesser von 0,1 bis 1 $\mu$m aufweist.

3. Chemischer Wärmespeicher (100) nach Anspruch 1 oder 2, bei dem das Strukturbeschränkungselement (30) einen hohlen Abschnitt mit einer Form aufweist, die mit der Form der polyedrischen Struktur der chemischen Wärmespeichermaterialstruktur (21) identisch ist oder homothetisch zu dieser ist, wobei die chemische Wärmespeichermaterialstruktur (21) in dem hohlen Abschnitt aufgenommen ist und jede Fläche der aufgenommenen chemischen Wärmespeichermaterialstruktur (21) durch eine Innenwand des hohlen Abschnitts beschränkt ist.

4. Chemischer Wärmespeicher (100) nach einem der Ansprüche 1 bis 3, bei dem:

   das Strukturbeschränkungselement (30) einen hohlen Abschnitt aufweist, der die chemische Wärmespeichermaterialstruktur (21) aufnimmt, und
   jede Fläche der chemischen Wärmespeichermaterialstruktur (21) mindestens mit einer Innenwandfläche des hohlen Abschnitts in Kontakt gebracht wird und beschränkt wird, wenn das Binden eines Wärmespeicher/freisetzungsreaktionsmediums in der chemischen Wärmespeichermaterialstruktur (21) gesättigt ist.

5. Chemischer Wärmespeicher (100) nach einem der Ansprüche 1 bis 4, bei dem das Strukturbeschränkungselement (30) eine Mehrzahl von Wänden (11, 13, 15) aufweist, die der polyedrischen Struktur der chemischen Wärmespeichermaterialstruktur (21) entsprechen, wobei mindestens eine der Mehrzahl von Wänden (11, 13, 15) eine Permeationswand (15) ist, welche die Permeation eines Wärmespeicher/freisetzungsreaktionsmediums zulässt, und mindestens eine der Mehrzahl von Wänden (11, 13, 15) eine Wärmeübertragungswand (11, 13) mit einer Wärmeleitfähigkeit ist.

6. Chemischer Wärmespeicher (100) nach einem der Ansprüche 1 bis 5, bei dem das chemische Wärmespeichermaterial ein hydratisierungsreaktives Wärmespeichermaterial ist, das Wärme im Zusammenhang mit einer Dehydratisierungsreaktion absorbiert und Wärme im Zusammenhang mit einer Hydratisierungsreaktion freisetzt.

7. Chemischer Wärmespeicher (100) nach einem der Ansprüche 1 bis 6, bei dem das chemische Wärmespeichermaterial ein Hydroxid eines Erdalkalimetalls ist.

8. Chemischer Wärmespeicher (100) nach einem der Ansprüche 1 bis 7, bei dem das Tonmineral eine laminierte Bandstruktur aufweist.

9. Chemischer Wärmespeicher (100) nach einem der Ansprüche 1 bis 8, bei dem das Tonmineral mindestens ein Tonmineral ist, das aus der Gruppe, bestehend aus Sepiolith, Palygorskit und Bentonit, ausgewählt ist.

10. Chemischer Wärmespeicher (100) nach einem der Ansprüche 1 bis 9, bei dem das chemische Wärmespeichermaterial ein Hydroxid ist und das Tonmineral eine Faserlänge aufweist, die gleich oder größer ist als der Teilchendurchmesser des Hydroxids, wenn das Hydroxid einer Hydratisierung bis zur maximalen Hydratisierung unterzogen worden ist.

**11.** Verfahren zur Herstellung eines chemischen Wärmespeichers (100), wobei das Verfahren das Aufnehmen einer chemischen Wärmespeichermaterialstruktur (21), die ein körniges chemisches Wärmespeichermaterial und ein Tonmineral umfasst und eine polyedrische Struktur aufweist, nach dem Desorbieren mindestens eines Teils eines Wärmespeicher/freisetzungsreaktionsmediums, das an die chemische Wärmespeichermaterialstruktur (21) gebunden ist, in einem Strukturbeschränkungselement (30) umfasst, das einen inneren Hohlraum aufweist, **dadurch gekennzeichnet, dass** das Strukturbeschränkungselement (30) jede Fläche der aufgenommenen chemischen Wärmespeichermaterialstruktur (21) mindestens an einem Abschnitt der Fläche beschränkt, wobei die chemische Wärmespeichermaterialstruktur (21) ein tatsächliches Dichteverhältnis von 45 % bis 63 % aufweist.

**12.** Verfahren zur Herstellung eines chemischen Wärmespeichers (100) nach Anspruch 11, bei dem das körnige chemische Wärmespeichermaterial einen durchschnittlichen Primärteilchendurchmesser von 0,1 bis 1 $\mu$m aufweist.

**13.** Verfahren zur Herstellung eines chemischen Wärmespeichers (100) nach Anspruch 11 oder 12, bei dem:

das Strukturbeschränkungselement (30) einen hohlen Abschnitt mit einer Form aufweist, die mit der Form der polyedrischen Struktur der chemischen Wärmespeichermaterialstruktur (21) identisch ist oder homothetisch zu dieser ist, und
beim Aufnehmen der chemischen Wärmespeichermaterialstruktur (21) in dem Strukturbeschränkungselement (30) die chemische Wärmespeichermaterialstruktur (21) in einem Zustand aufgenommen wird, in dem die chemische Wärmespeichermaterialstruktur (21), von der mindestens ein Teil des Wärmespeicher/freisetzungsreaktionsmediums desorbiert worden ist, und der hohle Abschnitt des Strukturbeschränkungselements (30) das gleiche homothetische Verhältnis in jedem Paar von entsprechenden Flächen aufweisen.

## Revendications

**1.** Accumulateur de chaleur chimique (100), comprenant:

une structure de matériau de stockage de chaleur chimique (21) qui comprend un matériau granulaire de stockage de chaleur chimique et un minéral argileux et qui présente une structure polyédrique; et
un élément de limitation de structure (30) qui reçoit la structure de matériau de stockage de chaleur chimique (21), **caractérisé en ce que** l'élément de limitation de structure (30) limite chaque face de la structure de matériau de stockage de chaleur chimique (21) au moins à une partie de la face,
et dans lequel la structure de matériau de stockage de chaleur chimique (21) présente un rapport de densité réelle compris entre 45 % et 63 %.

**2.** Accumulateur de chaleur chimique (100) selon la revendication 1, dans lequel le matériau granulaire de stockage de chaleur chimique présente un diamètre de particule primaire moyen compris entre 0,1 $\mu$m et 1 $\mu$m.

**3.** Accumulateur de chaleur chimique (100) selon la revendication 1 ou 2, dans lequel l'élément de limitation de structure (30) présente une partie creuse dont la forme est identique ou homothétique à la forme de la structure polyédrique de la structure de matériau de stockage de chaleur chimique (21), la structure de matériau de stockage de chaleur chimique (21) étant reçue dans la partie creuse, et chaque face de la structure de matériau de stockage de chaleur chimique (21) est limitée par une paroi intérieure de la partie creuse.

**4.** Accumulateur de chaleur chimique (100) selon l'une quelconque des revendications 1 à 3, dans lequel:

l'élément de limitation de structure (30) présente une partie creuse qui reçoit la structure de matériau de stockage de chaleur chimique (21); et
chaque face de la structure de matériau de stockage de chaleur chimique (21) est au moins amenée en contact avec une face de paroi intérieure de la partie creuse et est limitée lorsque la liaison d'un milieu de réaction de stockage/libération de chaleur est saturée dans la structure de matériau de stockage de chaleur chimique (21).

**5.** Accumulateur de chaleur chimique (100) selon l'une quelconque des revendications 1 à 4, dans lequel l'élément de limitation de structure (30) présente une pluralité de parois (11, 13, 15) correspondant à la structure polyédrique de la structure de matériau de stockage de chaleur chimique (21), au moins une de la pluralité de parois (11, 13, 15) est une paroi de perméation (15) qui permet la perméation d'un milieu de réaction de stockage/libération de chaleur, et au moins une de la pluralité de parois (11, 13, 15) est une paroi de transfert de chaleur (11, 13) qui présente une conductivité thermique.

6. Accumulateur de chaleur chimique (100) selon l'une quelconque des revendications 1 à 5, dans lequel le matériau de stockage de chaleur chimique est un de matériau de stockage de chaleur réactif par hydratation qui absorbe de la chaleur en conjonction avec une réaction de déshydratation et qui libère de la chaleur en conjonction avec une réaction d'hydratation.

7. Accumulateur de chaleur chimique (100) selon l'une quelconque des revendications 1 à 6, dans lequel le matériau de stockage de chaleur chimique est un hydroxyde d'un métal alcalino-terreux.

8. Accumulateur de chaleur chimique (100) selon l'une quelconque des revendications 1 à 7, dans lequel le minéral argileux présente une structure de ruban stratifié.

9. Accumulateur de chaleur chimique (100) selon l'une quelconque des revendications 1 à 8, dans lequel le minéral argileux est au moins une substance sélectionnée dans le groupe comprenant la sépiolite, la palygorskite et la bentonite.

10. Accumulateur de chaleur chimique (100) selon l'une quelconque des revendications 1 à 9, dans lequel le matériau de stockage de chaleur chimique est un hydroxyde, et le minéral argileux présente une longueur de fibre égale ou supérieure au diamètre de particule de l'hydroxyde lorsque l'hydroxyde a été soumis à une hydratation, jusqu'à une hydratation maximum.

11. Procédé de fabrication d'un accumulateur de chaleur chimique (100), le procédé comprenant la réception d'une structure de matériau de stockage de chaleur chimique (21) comprenant un matériau granulaire de stockage de chaleur chimique et un minéral argileux et présentant une structure polyédrique, après la désorption d'au moins une partie d'un milieu de réaction de stockage/libération de chaleur qui est lié à la structure de matériau de stockage de chaleur chimique (21), dans un élément de limitation de structure (30) présentant un creux interne, **caractérisé en ce que** l'élément de limitation de structure (30) limite chaque face de la structure de matériau de stockage de chaleur chimique (21) au moins à une partie de la face, dans lequel la structure de matériau de stockage de chaleur chimique (21) présente un rapport de densité réelle compris entre 45 % et 63 %.

12. Procédé de fabrication d'un accumulateur de chaleur chimique (100) selon la revendication 11, dans lequel le matériau granulaire de stockage de chaleur chimique présente un diamètre de particule primaire moyen compris entre 0,1 $\mu$m et 1 $\mu$m.

13. Procédé de fabrication d'un accumulateur de chaleur chimique (100) selon la revendication 11 ou 12, dans lequel:

l'élément de limitation de structure (30) présente une partie creuse dont la forme est identique ou homothétique à la forme de la structure polyédrique de la structure de matériau de stockage de chaleur chimique (21); et lors de la réception de la structure de matériau de stockage de chaleur chimique (21) dans l'élément de limitation de structure (30), la structure de matériau de stockage de chaleur chimique (21) est reçue dans un état dans lequel la structure de matériau de stockage de chaleur chimique (21), à partir de laquelle au moins une partie du milieu de réaction de stockage/libération de chaleur a été désorbée, et la partie creuse de l'élément de limitation de structure (30) présentent le même rapport homothétique dans chaque paire de faces correspondantes.

# FIG.1

100

13

11

15

# FIG.2

FIG.3

# FIG.4A

THICKNESS ERROR (%) =
(MAXIMUM THICKNESS b -
MINIMUM THICKNESS a)/
TARGET THICKNESS × 100

# FIG.4B

THICKNESS ERROR (%)

IN THE ABSENCE OF CLAY MINERAL

IN THE PRESENCE OF CLAY MINERAL

| 1.05 | 1.15 | 1.25 | 1.35 | 1.45 | DENSITY g/mL |
| 1.28 | | | | | |
| 46.8 | 51.3 | 55.8 | 60.2 | 64.7 | TRUE DENSITY RATIO % |
| 57.1 | | | | | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1225686 A
- JP 6080394 B
- JP 6080395 A
- US 20100252248 A1
- US 20020100369 A1